# EUROPEAN PATENT SPECIFICATION

(11) **EP 3 238 996 B1**
(45) Date of publication and mention of the grant of the patent: **07.08.2019**
(21) Application number: 15872867.5
(22) Date of filing: 16.12.2015
(51) Int. Cl.: B60R 1/072, B60R 1/06, B60R 1/02

(54) **VIEWING CONTROL DEVICE FOR VEHICLE**
SICHTSTEUERUNGSVORRICHTUNG FÜR EIN FAHRZEUG
DISPOSITIF DE COMMANDE DE VISUALISATION POUR VÉHICULE

(30) Priority: 22.12.2014 JP 2014259149
(43) Date of publication of application: 01.11.2017
(73) Proprietor: Kabushiki Kaisha Tokai Rika Denki Seisakusho, Ohguchi-cho Niwa-gun Aichi 480-0195 (JP)
(72) Inventor: MIYAZAKI, Shinichi, Niwa-gun Aichi 480-0195 (JP); NAGAO, Takashi, Niwa-gun Aichi 480-0195 (JP); KOBAYASHI, Fumikazu, Niwa-gun Aichi 480-0195 (JP); KONDO, Juntaro, Niwa-gun Aichi 4800-195 (JP)
(74) Representative: TBK
(86) International application number: PCT/JP2015/085281
(87) International publication number: WO 2016/104298

(56) References cited:
- DE-A1-102013 204 490
- JP-A- H04 201 749
- JP-A- 2009 056 885
- US-A1- 2005 030 654

## Description

### Technical Field

The present invention relates to a viewing control device for a vehicle that controls a viewing device for viewing the periphery of a vehicle, such as a door mirror or a camera or the like.

### Background Art

Japanese Utility Model Application Laid-Open (JP-U) No. H6-23829 proposes a rearview mirror device for a vehicle that has a mirror driving mechanism that obtains a turn direction signal from a direction indicator or a steering wheel, and moves a rearview mirror in respective directions.

Further, Japanese Patent Application Laid-Open (JP-A) No. 2010-208374 proposes an angle control device of a door mirror for a vehicle that has acceleration sensing means for sensing that a vehicle is accelerating at greater than or equal to a given acceleration from a given speed and within a given time period, steering angle range sensing means for sensing that the steering angle of the steering of the vehicle is within a given range within a given time period, and blinker operation sensing means for sensing that the right turn blinker of the vehicle has operated within a given time period, and in which, in a case in which it is sensed by these sensing means that the vehicle is accelerating at greater than or equal to a given acceleration from a given speed and within a given time period, and that the steering angle of the steering of the vehicle is within a given range within a given time period, and that the right tum blinker of the vehicle has operated within a given time period, effects control so as to open up, toward the outer side, the angle of the right side door mirror of the vehicle from a predetermined angle for a given time period and by a given angle.

Further prior art is disclosed in document US 2005/030654 A1 describing a door-mirror-controlling apparatus, which includes an ECU, a velocity detector, a turn-signal lamp, and a DC motor; the ECU includes an MPU and a motor driver circuit. The velocity detector detects the velocity of an automobile, and outputs a velocity signal to the ECU. The MPU outputs an outer-turn-start signal to the motor driver circuit when the turn-signal lamp is blinking while the automobile is moving at a predetermined velocity or more. When the motor driver circuit receives the outer-turn-start signal, it outputs a signal to the DC motor and the DC motor rotates such that a reflective surface of a mirror turns outward, away from the automobile, compared to its original state.

### SUMMARY OF INVENTION

### Technical Problem

However, in a case in which it is desired to confirm that the body will not be scraped on a narrow road, if changing of the viewing range is carried out as in JP-U No. H6-23829 and JP-A No. 2010-208374, the body side cannot be viewed and there will be control that runs counter to the intent of the vehicle occupant, and therefore, there is room for improvement.

The present invention was made in view of the above-described circumstances, and an object thereof is to suppress control that runs counter to the intent of a vehicle occupant in a case in which a viewing range is changed interlockingly with turning.

### Solution to Problem

In order to achieve the above-described object, the present invention is defined in claims 1 and 3. Further features are described in the Sub-claim.

In accordance with an aspect of the present invention, at the changing portion, the viewing range of the periphery of the vehicle, with respect to the vehicle occupant, is changed interlockingly with turning of the vehicle. For example, in a case in which the periphery of the vehicle is viewed by a mirror surface or a camera or the like, the changing portion changes the viewing range by driving an actuator such as a motor or the like so as to change the position of the mirror surface or the direction of imaging. Or, the changing portion changes the viewing range by changing the position that is cut-out from a captured image.

Further, in a case in which a predetermined condition for viewing the body side of the vehicle is established, at the control section, the changing portion is controlled so as to prohibit or stop the changing by the changing portion. Due thereto, in a case in which it is desired to view the body side, changing of the viewing range interlockingly with turning can be suppressed, and therefore, control that runs counter to the intent of the vehicle occupant can be suppressed.

Note that the control section may control the changing portion so as to prohibit changing by the changing portion in a case in which, before a start of changing by the changing portion, a preset first predetermined condition is established as the predetermined condition. Or, the control section may control the changing portion so as to stop changing by the changing portion in a case in which, in a midst of changing of the viewing range by the changing portion, a preset second predetermined condition is established as the predetermined condition. In this case, after stopping changing by the changing portion, the control section may further control the changing portion such that the viewing range becomes a viewing range before changing.

Further, the first predetermined condition includes a first condition that is that a vehicle speed during straight forward traveling before a turn switch is turned on is lower than a preset first vehicle speed, a second condition that is that a vehicle speed at a time when the vehicle starts turning is lower than a preset second vehicle speed, a third condition that is that a turning radius is less than a predetermined value, and a fourth condition that is that a steering angle is greater than a predetermined value, and the first predetermined condition is established in a case in which the respective conditions are all established before a start of changing by the changing portion. Further, the second predetermined condition includes a third condition that is that a turning radius is less than a predetermined value, and a fourth condition that is that a steering angle is greater than a predetermined value, and the second predetermined condition is established in a case in which both the third condition and the fourth condition are established in a midst of changing of the viewing range by the changing portion.

### Advantageous Effects of Invention

As described above, in accordance with the present invention, there is the effect that control that runs counter to the intent of the vehicle occupant can be suppressed.

### BRIEF DESCRIPTION OF DRAWINGS

Fig. 1 is an exterior view of a door mirror device for a vehicle that is the object of control of a door mirror control device relating to an embodiment of the present invention.
Fig. 2 is a cross-sectional view (a cross-sectional view along line 2-2 of Fig. 1) in which main portions of the door mirror device for a vehicle are seen from a vehicle vertical direction upper side (a vehicle upper side).
Fig. 3 is a block drawing showing the structure of the control system of the door mirror control device for a vehicle relating to the present embodiment.
Fig. 4 is a drawing for explaining turning-interlocked mirror control.
Fig. 5 is a drawing showing a situation in which the region of a viewing range is changed in accordance with the amount of turning.
Fig. 6A is a drawing showing a situation in which the space between a body and a wall falls outside of the viewing range, due to the turning-interlocked mirror control.
Fig. 6B is a drawing showing a situation in which the space between the body and the wall is within the viewing range, due to the turning-interlocked mirror control.
Fig. 7 is a flowchart that shows an example of the flow of processings that are carried out at an ECU of the door mirror control device for a vehicle relating to the present embodiment.
Fig. 8 is a flowchart that shows an example of the flow of mirror interlocking processings that are carried out at the ECU of the door mirror control device for a vehicle relating to the present embodiment.

### DESCRIPTION OF EMBODIMENTS

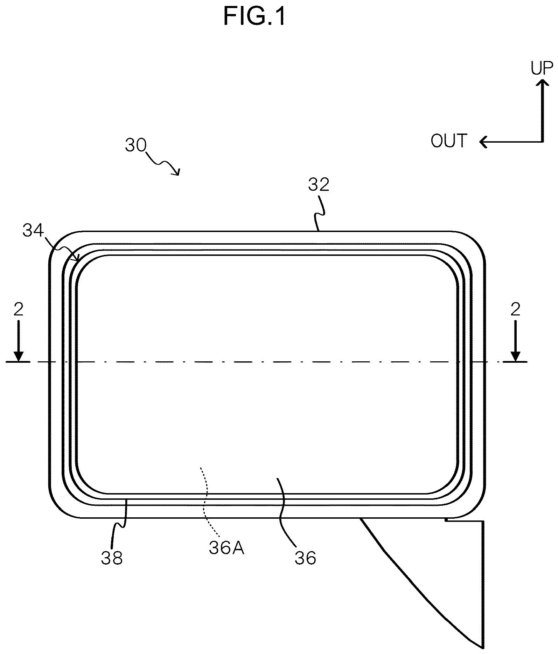

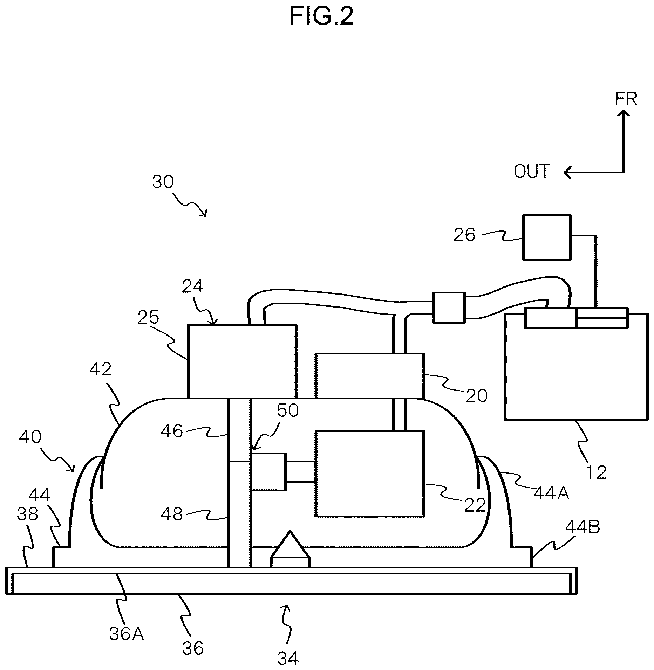

An example of an embodiment of the present invention is described in detail hereinafter with reference to the drawings. Note that, hereinafter, a door mirror control device for a vehicle is described as an example of the viewing control device for a vehicle of the present invention. Fig. 1 is an exterior view of a door mirror device for a vehicle that is the object of control of the door mirror control device relating to the embodiment of the present invention. Further, Fig. 2 is a cross-sectional view (a cross-sectional view along line 2-2 of Fig. 1) in which main portions of the door mirror device for a vehicle are seen from the vehicle vertical direction upper side (the vehicle upper side). Note that, in the drawings, the vehicle front side is indicated by arrow FR, a vehicle transverse direction outer side (the vehicle left side) is indicated by arrow OUT, and the upper side is indicated by arrow UP.

A door mirror device 30 for a vehicle is installed at the outer side of the front end of a vertical direction intermediate portion of a door (a front door) of the vehicle.

As shown in Fig. 1, the door mirror device 30 for a vehicle has a visor 32 that is substantially shaped as a rectangular parallelepiped container and serves as an outer peripheral member. The door mirror device 30 for a vehicle is installed at the door due to the vehicle transverse direction inner side portion of the visor 32 being supported at the door (the vehicle body side). Further, the interior of the visor 32 opens toward the vehicle rear side.

A mirror 34 that is substantially shaped as a rectangular flat plate is provided within the visor 32. The mirror 34 is disposed in the opening portion of the visor 32. A mirror main body 36 (mirror body) is provided at the vehicle rear side portion of the mirror 34. The vehicle rear side surface that is a reflecting film of the mirror main body 36 is made to be a mirror surface 36A. Further, the vehicle front side and the outer periphery of the mirror main body 36 are covered by a mirror holder 38 (a mirror holder outer).

As shown in Fig. 2, a mirror surface adjusting unit 40 that is electrically operated is provided within the visor 32.

A case 42 that is substantially shaped as a hemispherical container is provided at the vehicle front side portion of the mirror surface adjusting unit 40. The interior of the case 42 opens toward the vehicle rear side. The case 42 is supported by the visor 32, and, due thereto, the mirror surface adjusting unit 40 is supported by the visor 32.

A tilting body 44 (mirror holder inner) is provided at the vehicle rear side portion of the mirror surface adjusting unit 40. The tilting body 44 is held by the case 42 so as to be able to tilt (swing, pivot). A sliding tube 44A that is substantially shaped as a cylindrical tube is provided at the tilting body 44. The diameter of the sliding tube 44A becomes gradually smaller toward the vehicle front side, and the sliding tube 44A is made to be able to slide with respect to the peripheral wall of the case 42. A mounting plate 44B that is substantially disc shaped is provided integrally with the vehicle rear side end of the sliding tube 44A. The mirror holder 38 of the mirror 34 is detachably mounted to the vehicle rear side of the mounting plate 44B. Due thereto, the mirror 34 can be tilted integrally with the tilting body 44 and with respect to the case 42, with the center of gravity position of the mirror 34 (the surface central position of the mirror surface 36A) being the center.

An up/down motor (not illustrated) and an in/out motor 22 that serves as one element of a changing portion are fixed to the interior of the case 42. An up/down rod (not illustrated) and an in/out rod 48 that are respectively rod-shaped are connected to the up/down motor and the in/out motor 22 via gear mechanisms 50 that serve as mechanical mechanisms. The up/down rod and the in/out rod 48 are held within the case 42 so as to be able to slide (move) in the vehicle longitudinal direction (the axial direction). The distal end (the vehicle rear side end) of the up/down rod is rotatably held at the mounting plate 44B at the upper side (or may be at the lower side) of the center of gravity position of the mirror 34. The distal end (the vehicle rear side end) of the in/out rod 48 is rotatably held at the mounting plate 44B at the vehicle transverse direction outer side (or may be at the vehicle transverse direction inner side) of the center of gravity position of the mirror 34.

The up/down motor and the in/out motor 22 are electrically connected via mirror surface driving drivers 20 to an ECU 12 (a mirror ECU) that serves as a changing portion and a control section. The ECU 12 is provided within the visor 32 or at the vehicle body side. An adjustment operation device 26 is electrically connected to the ECU 12. When the adjustment operation device 26 is operated by a vehicle occupant (the driver in particular) of the vehicle, due to control of the ECU 12, the mirror surface adjusting unit 40 is operated, and the up/down motor and the in/out motor 22 are driven. Due thereto, the up/down rod and the in/out rod 48 are slid in the vehicle longitudinal direction, and the tilting body 44 and the mirror 34 are tilted with respect to the case 42. Due thereto, the tilted position of the mirror 34 is adjusted, and the angle of the mirror surface 36A of the mirror 34 (the direction in which the mirror surface 36A faces) is adjusted.

When the up/down rod is slid toward the vehicle front side, the tilting body 44 and the mirror 34 are tilted upward (in an upwardly-facing direction), and the mirror surface 36A of the mirror 34 is tilted in an upwardly-facing direction. When the up/down rod is slid toward the vehicle rear side, the tilting body 44 and the mirror 34 are tilted downward (in a downwardly-facing direction), and the mirror surface 36A of the mirror 34 is tilted in a downwardly-facing direction. When the in/out rod 48 is slid toward the vehicle front side, the tilting body 44 and the mirror 34 are tilted outward (in an outwardly-facing direction), and the mirror surface 36A of the mirror 34 is tilted in a direction of facing outwardly in the vehicle transverse direction. When the in/out rod 48 is slid toward the vehicle rear side, the tilting body 44 and the mirror 34 are tilted inward (in an inwardly-facing direction), and the mirror surface 36A of the mirror 34 is tilted in a direction of facing inwardly in the vehicle transverse direction.

As shown in Fig. 2, an up/down sensor (not illustrated) and an in/out sensor 24 are provided at the case 42. The up/down sensor and the in/out sensor 24 respectively are electrically connected to the ECU 12. A housing 25 that is substantially shaped as a rectangular parallelepiped box is provided at the up/down sensor and the in/out sensor 24, respectively. The up/down sensor and the in/out sensor 24 are fixed to the case 42 due to housings 25 being fixed to the outer side of the bottom wall of the case 42.

Detecting rods 46 that are rod-shaped are provided at the housings 25 so as to be slidable in the vehicle longitudinal direction (the axial direction). The detecting rods 46 project-out toward the vehicle rear side from the housings 25 and are urged toward the vehicle rear side. The detecting rods 46 pass-through the bottom wall of the case 42, and are inserted into the interior of the case 42. The detecting rods 46 of the up/down sensor and the in/out sensor 24 are disposed coaxially with and at the vehicle front sides of the up/down rod and the in/out rod 48, respectively. The distal ends (the vehicle rear side ends) of the detecting rods 46 of the up/down sensor and the in/out sensor 24 are, by urging forces, made to contact the proximal ends (the vehicle front side ends) of the up/down rod and the in/out rod 48 respectively. The detecting rods 46 of the up/down sensor and the in/out sensor 24 can always slide in the vehicle longitudinal direction integrally with the up/down rod and the in/out rod 48, respectively. Therefore, due to the up/down sensor and the in/out sensor 24 detecting the slid positions in the vehicle longitudinal direction of the detecting rods 46 respectively, the up/down sensor and the in/out sensor 24 detect the slid positions in the vehicle longitudinal direction of the up/down rod and the in/out rod 48 respectively, and detect the tilted position of the mirror 34 in the up/down direction and the in/out direction.

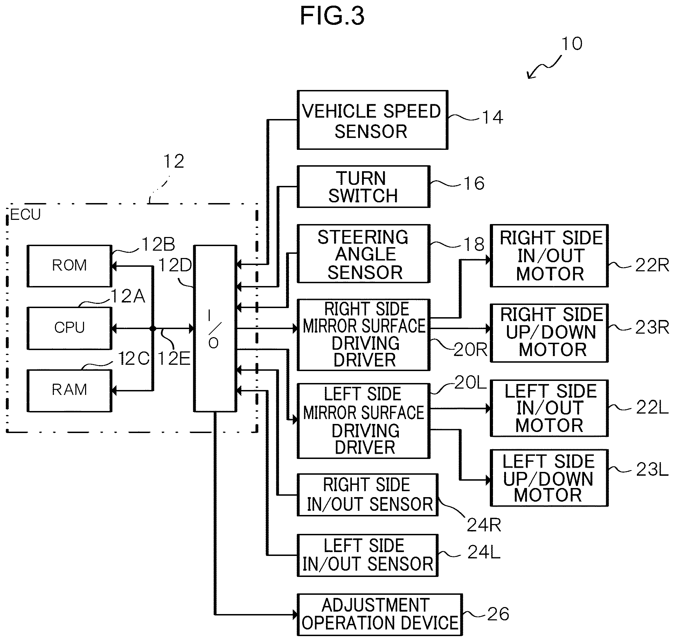

Fig. 3 is a block drawing showing the structure of the control system of the door mirror control device 10 for a vehicle relating to the present embodiment.

As described above, the door mirror control device 10 for a vehicle has the ECU 12. The ECU 12 is structured by a microcomputer in which a CPU 12A, a ROM 12B, a RAM 12C and an I/O (input/output interface) 12D are respectively connected to a bus 12E.

A turning-interlocked mirror control program that is described later, various types of data such as various types of tables, formulas and the like, and the like are stored in the ROM 12B. Due to the program that is stored in the ROM 12B being expanded in the RAM 12C and being executed by the CPU 12A, control that moves the mirror surface 36A of the mirror 34 interlockingly with turning is carried out. Note that, as an example, the turning-interlocked mirror control program is stored as the program that is stored in the ROM 12B, but other programs also are stored.

A vehicle speed sensor 14, a turn switch 16, a steering angle sensor 18, a right side mirror surface driving driver 20R, a left side mirror surface driving driver 20L, a right side in/out sensor 24R, a left side in/out sensor 24L, and the above-described adjustment operation device 26 are connected to the I/O 12D.

The vehicle speed sensor 14 detects the traveling speed of the vehicle (hereinafter called the vehicle speed), and the results of detection are inputted to the ECU 12.

The turn switch 16 is a switch for instructing lighting of the turn signals, and instructions for lighting the left and right turn signals are inputted to the ECU 12. Due thereto, on the basis of the signals of the turn switch 16, the ECU 12 judges the intent of the vehicle occupant to turn.

The steering angle sensor 18 detects the steering angle (hereinafter called steering angle) of the steering, and inputs the results of detection of the steering angle to the ECU 12.

A right side up/down motor 23R and a right side in/out motor 22R are connected to the right side mirror surface driving driver 20R. The right side up/down motor 23R and the right side in/out motor 22R are driven in accordance with instructions of the ECU 12. Further, a left side up/down motor 23L and a left side in/out motor 22L are connected to the left side mirror surface driving driver 20L. The left side up/down motor 23L and the left side in/out motor 22L are driven in accordance with instructions of the ECU 12.

The right side in/out sensor 24R detects the tilted position of the right side mirror 34 in the in/out direction, and the left side in/out sensor 24L detects the tilted position of the left side mirror 34 in the in/out direction, and they respectively input the results of detection to the ECU 12. Note that, although not illustrated, up/down sensors as well are provided in correspondence with the respective left and right mirrors 34, and are connected to the ECU 12.

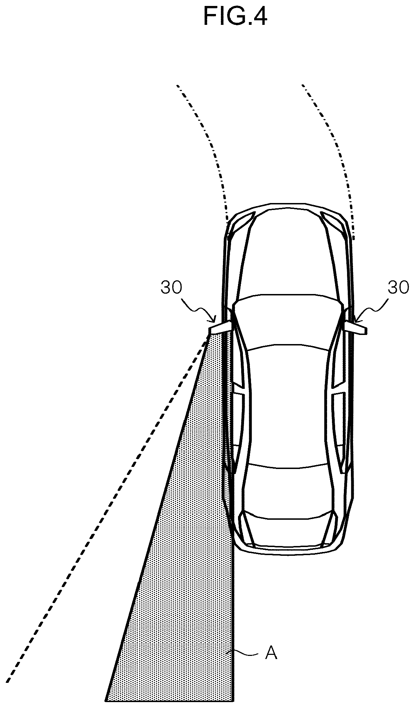

Here, the turning-interlocked mirror control that serves as the changing portion and is carried out at the door mirror control device 10 for a vehicle relating to the present embodiment is described. Fig. 4 is a drawing for explaining the turning-interlocked mirror control.

The turning-interlocked mirror control is carried out due to the ECU 12 executing the turning-interlocked mirror control program that is stored in the ROM 12B.

In a case of carrying out turning such as a right turn or a left turn or the like, the vehicle occupant confirms the door mirror device 30 for a vehicle, and confirms turn collision objects such as bicycles and the like. However, when the turn is started, in accordance with the turning, the viewing range of the periphery of the vehicle, with respect to the vehicle occupant, of the door mirror device 30 for a vehicle moves outside of the region where objects of confirmation as turn collision objects, such as bicycles or the like, exist.

Because objects of confirmation come out of the viewing range at the time of turning of the vehicle in this way, in the turning-interlocked mirror control, control is carried out to tilt the mirror surface 36A of the mirror 34 and change the viewing range, interlockingly with the turning of the vehicle.

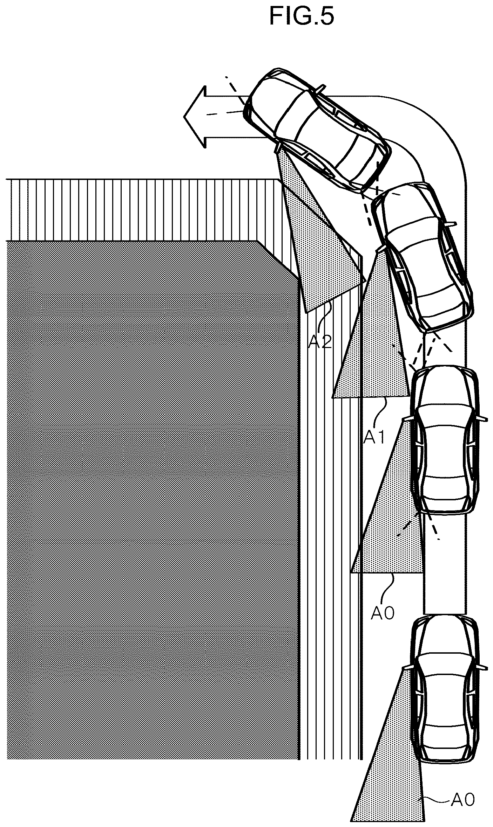

Concretely, in a usual state such as a state of traveling straight forward or the like, the vehicle occupant is at a position of viewing region A of the viewing range that is shown in Fig. 4 and is set in advance. Here, at the time of a turn, the amount of turning is detected from the results of detection of the vehicle speed sensor 14 and the steering angle senor 18. Then, the ECU 12 controls the driving of the in/out motor 22 so as to tilt the mirror surface 36A and move the region A of the viewing range in the direction of the dashed line in Fig. 4, in accordance with the detected amount of turning. Due thereto, as shown in Fig. 5, in accordance with the amount of turning, the viewing range is changed from region A0 to regions AI, A2, and confirmation of turn collision objects at the time of turning can be carried out reliably. Note that, in the present embodiment, the condition for starting the turning-interlocked mirror control is, as an example, starting in a case in which the turn switch 16 is on and the steering angle is greater than or equal to a preset threshold value (e.g., 4° or the like). Further, tilting of the mirror surface 36A that corresponds to the amount of turning is controlled by storing, in the ECU 12 and in advance, amounts of movement of the mirror surface 36A that correspond to amounts of turning, and reading-out an amount of movement that corresponds to the amount of turning.

Note that, in the present embodiment, description is given, as an example, of a case in which the turn switch 16 being on and a steering angle that is greater than or equal to a predetermined steering angle being detected are the condition for starting the turning-interlocked mirror control. However, the change condition is not limited to this. For example, the results of detection of another sensor, such as an acceleration sensor or the like, or the like may be used as the start condition.

By the way, as described above, confirmation of turn collision objects can be carried out reliably at the time of turning, by carrying out the turning-interlocked mirror control. However, in a case of carrying out a left turn on a narrow road, there are cases in which the need to view the body side of the vehicle is strong.

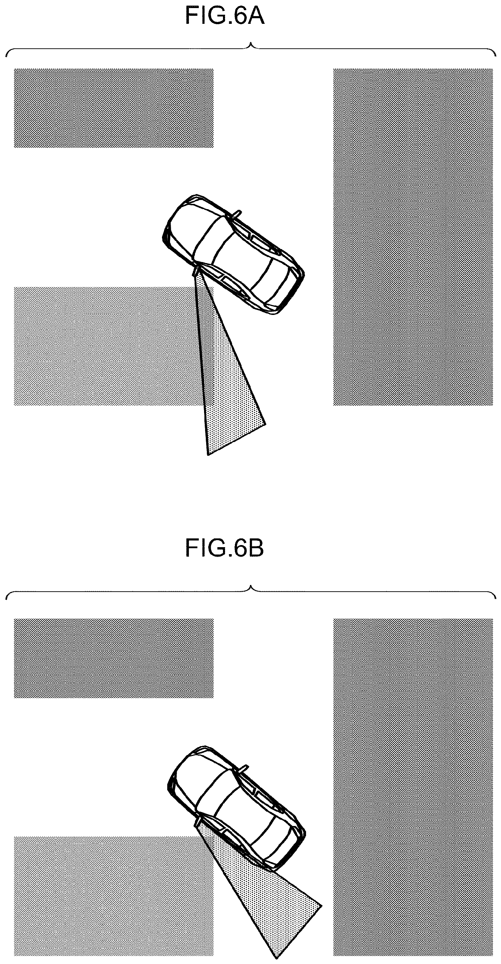

For example, when the turning-interlocked mirror control is carried out as described above in the case of carrying out a left turn on a narrow road, as shown in Fig. 6A, the space between the body and the wall falls outside of the viewing range, and the gap between the body and the wall cannot be confirmed.

Here, in the present embodiment, it is judged whether or not the body side is to be seen, and, in a case in which the body side is to be seen, the turning-interlocked mirror control is prohibited or stopped. For example, in a case in which a condition for carrying out the turning-interlocked mirror control is established, the transition to the turning-interlocked mirror control is prohibited in a case in which a predetermined condition for viewing the body side is established. Further, in a case in which a predetermined condition for viewing the body side is established in the midst of the turning-interlocked mirror control, the turning-interlocked mirror control is stopped, and control is carried out to return the viewing range to the original position. Due thereto, in a case in which it is desired to view the body side on a narrow road or the like, as shown in Fig. 6B, changing of the viewing range by the turning-interlocked mirror control is not carried out. Therefore, the gap between the body and the wall can be confirmed, and control that runs counter to the intent of the vehicle occupant can be suppressed.

Note that, as predetermined conditions for viewing the body side, there are a first predetermined condition that is before the turning-interlocked mirror control is carried out, and a second predetermined condition that is in the midst of the turning-interlocked mirror control.

In the present embodiment, the first predetermined condition includes a first condition through a fourth condition that are described hereinafter, and the second predetermined condition includes a third condition and a fourth condition that are described hereinafter.

The first condition is the condition that the vehicle speed during traveling straight forward before the turn switch is turned on is lower than a first vehicle speed (e.g., 30 km/h or the like). The first condition is established in a case in which this vehicle speed is lower than the first vehicle speed.

The second condition is the condition that the vehicle speed at the time of starting to turn left (in the case of a right hand-drive vehicle) is lower than a second vehicle speed (e.g., 10 km/h or the like). The second condition is established in a case in which this vehicle speed is lower than the second vehicle speed.

The third condition is the condition that a predicted turning radius that is determined from the vehicle speed and the steering angle is less than a predetermined value (e.g., 7 m or the like). The third condition is established in a case in which the predicted turning radius is less than the predetermined value.

The fourth condition is the condition that the operated amount of the steering wheel (the steering angle) is greater than a predetermined value (e.g., 360°). The fourth condition is established in a case in which the operated amount is greater than the predetermined value.

Further, in a case in which all of the first condition through the fourth condition are established before the turning-interlocked mirror control, it is judged that the first predetermined condition for viewing the body side is established. In a case in which the third condition and the fourth condition are both established in the midst of the turning-interlocked mirror control, it is judged that the second predetermined condition is established.

Note that the first condition is an example of a condition for judging whether or not the road is a road of a low speed limit. Further, the second condition is an example of a condition for judging whether or not the road is a road that necessitates cautious turning (there is the possibility of scraping). Moreover, the third condition and the fourth condition are examples of conditions for judging whether or not the road is a road that necessitates turning of the steering wheel greatly from the time that the nose of the vehicle is jutted-out. Further, the present embodiment describes an example of using the above-described predetermined conditions, but the predetermined conditions may be other conditions.

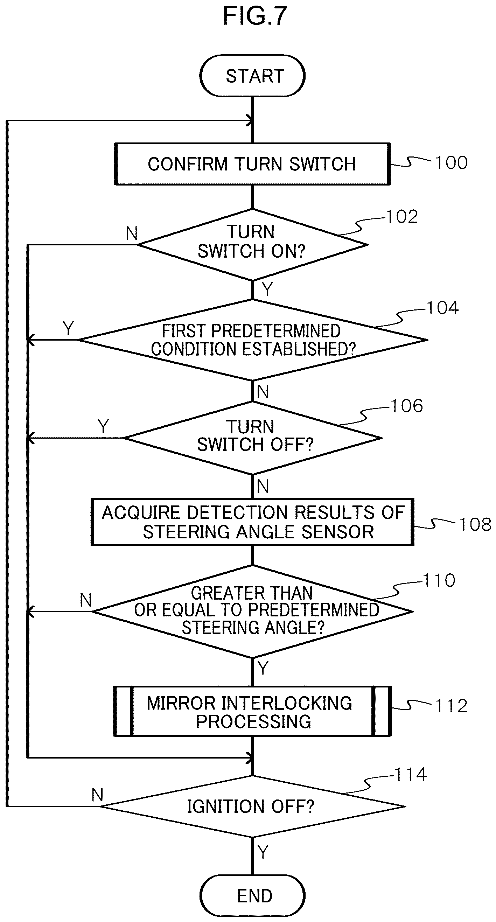

Next, concrete processings that are carried out by the ECU 12 of the door mirror control device 10 for a vehicle, which relates to the present embodiment and is structured as described above, are described. Fig. 7 is a flowchart showing an example of the flow of processings that are carried out by the ECU 12 of the door mirror control device 10 for a vehicle relating to the present embodiment. Note that explanation is given of an example in which the processings of Fig. 7 are started in a case in which an unillustrated ignition switch is turned on.

First, in step 100, the ECU 12 confirms the operating state of the turn switch 16, and the routine moves on to step 102.

In step 102, the ECU 12 judges whether or not the turn switch 16 has been turned on. If this judgment is affirmative, the routine moves on to step 104, and if this judgment is negative, the routine moves on to step 114.

In step 104, the ECU 12 judges whether or not the first predetermined condition for body side viewing is established. In this judgment, the ECU 12 judges whether or not all of the above-described first condition through the fourth condition are established. If this judgment is affirmative, the routine moves on to step 114 without carrying out mirror interlocking processing which is described later and is turning-interlocked mirror control. On the other hand, if the judgment is negative, the routine moves on to step 106.

In step 106, the ECU 12 judges whether or not the turn switch 16 has been turned off. If this judgment is affirmative, the routine moves on to step 114, and is this judgment is negative, the routine moves on to step 108.

In step 108, the ECU 12 acquires the results of detection of the steering angle sensor 18, and the routine moves on to step 110.

In step 110, the ECU 12 judges whether or not the steering angle that has been detected by the steering angle sensor 18 is greater than or equal to a predetermined steering angle. If this judgment is affirmative, the routine moves on to step 112, and if this judgment is negative, the routine moves on to step 114.

In step 112, the ECU 12 carries out mirror interlocking processing, and the routine moves on to step 114. Although details thereof are described later, in this mirror interlocking processing, for example, the ECU 12 determines the amount of turning from the respective results of detection of the steering angle sensor 18 and the vehicle speed sensor 14, and controls driving of the in/out motor 22 so as to move the mirror surface 36A to a preset position in accordance with the amount of turning. Concretely, in this control, control is carried out such that, the greater the amount of turning, the more the mirror surface 36A is directed toward the outer side, and the better the region at the outer side can be viewed. Note that movement of the mirror surface 36A that is interlocked with the turning may be controlled such that, when the steering angle starts to become smaller, the control ends and the mirror surface 36A is moved to its original position. Or, movement of the mirror surface 36A that is interlocked with the turning may be controlled such that, in a case in which the steering angle becomes a steering angle that is such that it is judged that there is a state of traveling straight forward, the control ends and the mirror surface 36A is moved to its original position. Or, movement of the mirror surface 36A that is interlocked with the turning may be controlled such that, in a case in which another condition is established, the control ends, and the mirror surface 36A is moved to its original position.

Further, in step 114, the ECU 12 judges whether or not the ignition switch has been turned off. If this judgment is negative, the routine returns to step 100 and the above-described processings are carried out. If this judgment is affirmative, the series of processings is ended.

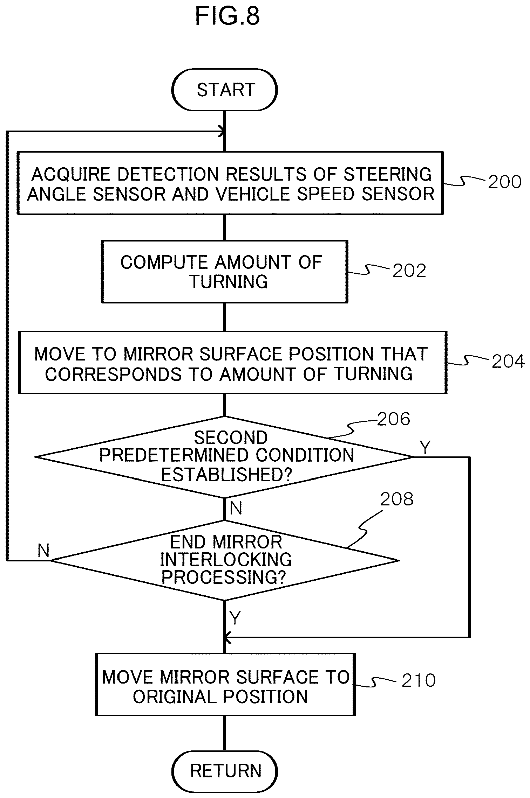

The detailed flow of the mirror interlocking processing that is carried out in aforementioned step 112 is described next. Fig. 8 is a flowchart that shows an example of the flow of mirror interlocking processings that are carried out at the ECU 12 of the door mirror control device for a vehicle relating to the present embodiment.

When there is a transition to the mirror interlocking processing, in step 200, the ECU 12 acquires the results of detection of the steering angle sensor 18 and the vehicle speed sensor 14, and the routine moves on to step 202.

In step 202, the ECU 12 computes the amount of turning from the detected vehicle speed and steering angle, and the routine moves on to step 204.

In step 204, the ECU 12 controls driving of the in/out motor 22 such that the mirror surface 36A moves to a preset position in accordance with the amount of turning, and the routine moves on to step 206.

In step 206, the ECU 12 judges whether or not the second predetermined condition for body side viewing has been established. In this judgment, the ECU 12 judges whether or not the above-described third condition and fourth condition have both been established. If this judgment is negative, the routine moves on to step 208, and if this judgment is affirmative, the routine moves on to step 210.

In step 208, the ECU 12 judges whether or not the mirror interlocking processing is to be ended. This judgment may be, as described above, a judgment as to whether or not the steering angle has started to become smaller, or may be a judgment as to whether or not there has become a steering angle that is such that it is judged that there is a state of traveling straight forward, or may be a judgment as to whether another condition has been established. In a case in which this judgment is negative, the routine returns to step 200 and the above-described processings are repeated. In a case in which this judgment is affirmative, the routine moves on to step 210.

In step 210, the turning-interlocked mirror control is stopped, and the ECU 12 controls the driving of the in/out motor 22 so as to move the mirror surface 36A to its original position before the changing of the viewing range, and returns to the series of mirror interlocking processings, and the routine moves on to above-described step 114.

By carrying out processings in this way, in the present embodiment, the viewing range is changed interlockingly with turning, and therefore, confirmation of turn collision objects can be carried out reliably.

On the other hand, in a situation in which it is described to confirm the body side such as on a narrow road or the like, the first predetermined condition is established before the turning-interlocked mirror control is carried out, and changing of the viewing range is not carried out. Therefore, the body side can be confirmed. Further, in the midst of the turning-interlocked mirror control, the second predetermined condition is established, the changing of the viewing range is stopped, and the viewing range is returned to the original viewing range. Therefore, the body side can be confirmed. Accordingly, control that runs counter to the intent of the vehicle occupant can be suppressed.

Note that the above-described embodiment describes the door mirror control device 10 for a vehicle as an example of the viewing control device for a vehicle, but the present invention is not limited to this. For example, the present invention may be applied to a structure that controls a rearview mirror or the like instead of the door mirror device 30 for a vehicle. Or, instead of the door mirror device 30 for a vehicle, the present invention may be applied to an imaging device such as a camera or the like, and may be applied to driving the imaging direction of the imaging device interlockingly with turning. Further, as the method of changing the viewing range in the case of application to an imaging device such as a camera or the like, the present invention may be applied to a structure in which the changing of the imaging direction is not changing by moving the camera, but that changes the display range for the vehicle occupant by cutting-out from the captured image.

Further, the above-described embodiment describes, as an example, a case in which, as the condition for starting the turning-interlocked mirror control, the turn switch 16 is turned on and a steering angle of greater than or equal to a predetermined steering angle is detected. However, navigation information of a navigation device, or the like, may be included in the condition for starting.

Further, the above-described embodiment describes, as an example, the first condition through the fourth condition as predetermined conditions for viewing the body side, but the present invention is not limited to this. For example, from navigation information of a navigation device, it may be judged whether or not a turn is being attempted on a narrow road. Or, the condition that the angular velocity of the steering wheel is less than a threshold value, or the condition that there is turning in which the nose of the vehicle is steered in the direction opposite the intended direction (e.g., a left turn that is accompanied by turning toward the right side before the left turn, or the like), or the condition that turning-back has arisen, or the like may be included as a predetermined condition as appropriate.

## Claims

1. A viewing control device (30) for a vehicle, comprising:
a) a changing portion (12) that, interlockingly with turning of a vehicle, changes a viewing range of a periphery of the vehicle with respect to a vehicle occupant; and
b) a control section (12) that, in a midst of changing of the viewing range by the changing portion (12) in a case in which a preset second predetermined condition for viewing a body side of the vehicle is established, controls the changing portion (12) so as to stop changing by the changing portion (12),
c) wherein the second predetermined condition includes a third condition that is a turning radius being less than a predetermined value, and a fourth condition that is a steering angle being greater than a predetermined value.

2. The viewing control device (30) for a vehicle of claim 1, wherein, after stopping changing by the changing portion (12), the control section (12) further controls the changing portion (12) such that the viewing range becomes a viewing range before changing.

3. A viewing control device (30) for a vehicle, comprising:
a) a changing portion (12) that, interlockingly with turning of a vehicle, changes a viewing range of a periphery of the vehicle with respect to a vehicle occupant; and
b) a control section (12) that, in a case in which a predetermined condition for viewing a body side of the vehicle is established, controls the changing portion (12) so as to prohibit changing by the changing portion (12), wherein:
c) the control section (12) controls the changing portion (12) so as to prohibit changing by the changing portion (12) in a case in which, before a start of changing by the changing portion (12), a preset first predetermined condition is established as the predetermined condition; and
the first predetermined condition includes:
a first condition that is a vehicle speed during straight forward traveling before a turn switch is turned on being lower than a preset first vehicle speed,
a second condition that is a vehicle speed at a time when the vehicle starts turning being lower than a preset second vehicle speed,
a third condition that is a turning radius being less than a predetermined value, and
a fourth condition that is a steering angle being greater than a predetermined value,
the first predetermined condition being established in a case in which the respective conditions are all established before a start of changing by the changing portion (12).

## Patentansprüche

1. Sichtsteuervorrichtung (30) für ein Fahrzeug mit:
a) einem Änderungsabschnitt (12), der ineinandergreifend mit dem Lenken eines Fahrzeugs einen Sichtbereich einer Peripherie des Fahrzeugs mit Bezug zu einem Fahrzeuginsassen ändert; und
b) einem Steuerungsabschnitt (12), der mitten in der Änderung des Sichtbereichs durch den Änderungsabschnitt (12) in einem Fall, in dem eine voreingestellte zweite vorbestimmte Bedingung für die Betrachtung einer Karosserieseite des Fahrzeugs etabliert ist, den Änderungsabschnitt (12) steuert, um die Änderung durch den Änderungsabschnitt (12) zu stoppen,
c) wobei die zweite vorbestimmte Bedingung eine dritte Bedingung enthält, dass ein Lenkradius weniger als ein vorbestimmter Wert ist, und eine vierte Bedingung, dass ein Lenkwinkel größer als ein vorbestimmter Wert ist.

2. Sichtsteuervorrichtung (30) für ein Fahrzeug nach Anspruch 1, wobei der Steuerungsabschnitt (12) nach dem Stoppen der Änderung durch den Änderungsabschnitt (12) des Weiteren den Änderungsabschnitt (12) steuert, so dass der Sichtbereich ein Sichtbereich vor der Änderung wird.

3. Sichtsteuervorrichtung (30) für ein Fahrzeug mit:
a) einem Änderungsabschnitt (12), der ineinandergreifend mit dem Lenken eines Fahrzeugs einen Sichtbereich einer Peripherie des Fahrzeugs mit Bezug zu einem Fahrzeuginsassen ändert; und
b) einem Steuerungsabschnitt (12), der in einem Fall, in dem eine vorbestimmte Bedingung zur Betrachtung einer Karosserieseite des Fahrzeugs etabliert ist, den Änderungsabschnitt (12) so steuert, um die Änderung durch den Änderungsabschnitt (12) zu verhindern, wobei:
c) der Steuerungsabschnitt (12) den Änderungsabschnitt (12) so steuert, um die Änderung durch den Änderungsabschnitt (12) in einem Fall zu verhindern, in dem vor einem Start der Änderung durch den Änderungsabschnitt (12) eine voreingestellte erste vorbestimmte Bedingung als die vorbestimmte Bedingung etabliert ist; und
die erste vorbestimmte Bedingung umfasst:
eine erste Bedingung, dass eine Fahrzeuggeschwindigkeit während dem Geradeausfahren ehe ein Schalter eingeschalten wird, niedriger ist als eine voreingestellte erste Fahrzeuggeschwindigkeit,
eine zweite Bedingung, dass eine Fahrzeuggeschwindigkeit zu einem Zeitpunkt niedriger als eine voreingestellte zweite Fahrzeuggeschwindigkeit ist, wenn das Fahrzeug zu lenken beginnt,
eine dritte Bedingung, dass ein Lenkradius niedriger ist als ein vorbestimmter Wert, und
eine vierte Bedingung, dass ein Lenkwinkel größer als ein vorbestimmter Wert ist,
wobei die erste vorbestimmte Bedingung in einem Fall etabliert wird, in dem die jeweiligen Bedingungen alle vor dem Start der Änderung durch den Änderungsabschnitt (12) etabliert wurden.

## Revendications

1. Dispositif de commande de vision (30) pour un véhicule, comprenant :
a) une portion de changement (12) qui, en lien avec le virage d'un véhicule, change une plage de vision d'une périphérie du véhicule par rapport à un occupant du véhicule ; et
b) une section de commande (12) qui, en cours de changement de la plage de vision par la portion de changement (12) dans un cas où une deuxième condition prédéterminée prédéfinie pour voir un côté caisse du véhicule est établie, commande la portion de changement (12) de façon à arrêter le changement par la portion de changement (12),
c) dans lequel la deuxième condition prédéterminée comporte une troisième condition qui est un rayon de virage inférieur à une valeur prédéterminée, et une quatrième condition qui est un angle de braquage supérieur à une valeur prédéterminée.

2. Dispositif de commande de vision (30) pour un véhicule selon la revendication 1, dans lequel, après l'arrêt du changement par la portion de changement (12), la section de commande (12) commande en outre la portion de changement (12) de sorte que la plage de vision devienne une plage de vision avant changement.

3. Dispositif de commande de vision (30) pour un véhicule, comprenant :
a) une portion de changement (12) qui, en lien avec le virage d'un véhicule, change une plage de vision d'une périphérie du véhicule par rapport à un occupant du véhicule ; et
b)une section de commande (12) qui, dans un cas où une condition prédéterminée pour voir un côté caisse du véhicule est établie, commande la portion de changement (12) de façon à interdire le changement par la portion de changement (12), dans lequel :
c) la section de commande (12) commande la portion de changement (12) de façon à interdire un changement par la portion de changement (12) dans un cas où, avant un début de changement par la portion de changement (12), une première condition prédéterminée prédéfinie est établie en tant que condition prédéterminée ; et
la première condition prédéterminée comporte :
une première condition qui est une vitesse de véhicule pendant une marche avant, avant qu'un clignotant soit activé, qui est inférieure à une première vitesse de véhicule prédéfinie,
une deuxième condition qui est une vitesse de véhicule à un moment où le véhicule commence à tourner qui est inférieure à une seconde vitesse de véhicule prédéfinie, une troisième condition qui est un rayon de virage inférieur à une valeur prédéterminée, et
une quatrième condition qui est un angle de braquage supérieur à une valeur prédéterminée,
la première condition prédéterminée étant établie dans un cas où les conditions respectives sont toutes établies avant un début de changement par la portion de changement (12).
